# FASCICULE DE BREVET EUROPEEN

(11) **EP 0 550 315 B1**
(45) Date de publication et mention de la délivrance du brevet: **13.03.1996**
(21) Numéro de dépôt: 92403481.2
(22) Date de dépôt: 21.12.1992
(51) Int. Cl.: C08G 69/36, C08L 77/10

(54) **Procédé de préparation de copolyamides**
Verfahren zur Herstellung von Copolyamiden
Process of copolyamide preparation

(30) Priorité: 31.12.1991 FR 9116404
(43) Date de publication de la demande: 07.07.1993
(73) Titulaire: ELF ATOCHEM S.A., F-92800 Puteaux (FR)
(72) Inventeur: Sage, Jean-Marc, F-27470 Serquigny (FR); Blondel, Philippe, F-27300 Bernay (FR); Maj, Philippe, W-5340 Bad Honnes (DE); Judas, Didier, F-75017 Paris (FR)
(74) Mandataire: Hirsch, Marc-Roger

(56) Documents cités:
- EP-A- 0 458 470

## Description

La présente invention a pour objet un nouveau procédé de préparation de polyamides contenant des motifs lactames ou aminoacides correspondants ou la combinaison stoechiométrique d'une ou plusieurs diamines avec un ou plusieurs diacides dicarboxyliques, des motifs diacide aromatique et des motifs diamine aliphatique, cycloaliphatique, ou aromatique-aliphatique.

FR-2 324 672 décrit un procédé de polycondensation sous pression d'une diamine cycloaliphatique, d'acides iso- et térephtalique et de lactame ou aminoacide correspondant, conduisant à des polyamides transparents. De même, la diamine cycloaliphatique peut être remplacée par une diamine aliphatique, par exemple l'hexaméthylènediamine. Ce procédé en une étape avec introduction de l'ensemble des réactifs ("one pot") présente plusieurs inconvénients. Notamment, la diamine étant introduite en totalité à l'instant initial, celle-ci subit une dégradation présumablement suite à une réaction de déamination conduisant à des triamines et aussi une réticulation, ce qui affecte négativement le taux de vidange du réacteur, c'est-à-dire la quantité de polymère récupérée. De plus, ce procédé ne permet pas l'introduction de quantités importantes de diacide aromatique comme l'acide térephtalique. Ce procédé nécessite aussi des temps de réaction importants et le taux de lactame résiduel est important.

EP-A-O 313 436 décrit un procédé de préparation de polyamides comprenant deux étapes ( procédé "two pot"). Dans une première étape, on charge dans un réacteur l'acide térephtalique et/ou isophtalique, ainsi que le lactame ou l'amino-acide correspondant, puis dans une seconde étape, on fait réagir la diamine avec le prépolymère diacide formé à la première étape. Ce procédé pallie certains inconvénients des procédés classiquement utilisés jusqu'à présent, par exemple celui décrit dans FR 2 324 672, mais présente aussi des inconvénients. En effet, le taux d'acide résiduel après la première étape est important, et l'acide s'accumule sur les parois du réacteur par exemple, et donc provoque des problèmes de conduite du procédé dus à la variation des proportions dans le réacteur.

JP-48036957 décrit un procédé de synthèse dans lequel un des composants diacide ou diamine est introduit en excès de 1 à 10% molaire au cours de la première étape de polymérisation. Néanmoins, le procédé ne s'applique qu'aux polyamides constitués de deux motifs principalement, tels que les nylons, et non aux polyamides recherchés dans la présente invention.

Il existe donc un besoin d'un procédé qui soit rapide, qui présente un taux de vidange élevé et qui puisse être mis en oeuvre pour la synthèse de tout polyamide, quels que soient les produits de départ et leur proportion.

De façon surprenante, la demanderesse a trouvé que ces buts sont atteints avec le procédé selon la présente invention.

Ainsi, la présente invention a pour objet un procédé de fabrication de polyamides constitués des motifs:
(a) lactame(s) et/ou aminoacide(s) correspondant(s) ou la combinaison sensiblement stoechiométrique d'une ou plusieurs diamine(s) aliphatique(s) et d'un ou plusieurs acide(s) aliphatique(s) dicarboxyliques(s),
(b) diacide(s) aromatique(s) HOOC-Ar-COOH, où Ar est un radical aromatique divalent;
(c) diamine(s) cycloaliphatique(s) et/ou aliphatique(s) et/ou aromatique-aliphatique(s),
   comprenant les étapes de:
   (i) réaction des motifs (a) lactame(s) et/ou aminoacide(s) correspondant(s) ou la combinaison sensiblement stoechiométrique d'une ou plusieurs diamine(s) aliphatique(s) et d'un ou plusieurs acide(s) aliphatique(s) dicarboxylique(s), avec les motifs (b) diacide(s) aromatique(s), et avec de 10 à 90% en poids des motifs (c) diamine(s) aliphatique(s) et/ou cycloaliphatique(s) et/ou aromatique-aliphatique(s); et
   (ii) réaction de l'oligomère produit de l'étape (i) avec le solde des motifs (c) diamine(s) aliphatique(s) et/ou cycloaliphatique(s) et/ou aromatique-aliphatique(s) en une ou plusieurs fois.

Le terme "lactame(s)" tel qu'utilisé dans la présente description désigne les lactames contenant plus de 5 atomes de carbone, de préférence de 6 à 12 atomes de carbone. Des mélanges de lactames sont aussi envisagés dans la présente invention.
Les lactames préférés sont l'ε-caprolactame, l'undécanolactame, le lauryllactame (ou lactame 12), ci-après désigné L12, conduisant au motif 12.

Le terme "aminoacide correspondant" tel qu'utilisé dans la présente description désigne les ω-aminoacides contenant autant d'atomes de carbone que le lactame correspondant. En fait, ces ω-aminoacides peuvent être considérés comme les lactames dont le cycle est ouvert au niveau de la liaison peptidique. Les ω-aminoacides contiennent plus de 5 atomes de carbone, de préférence de 6 à 12. Des mélanges d'ω-aminoacides sont aussi envisagés dans la présente invention.
Les ω-aminoacides préférés sont l'acide 6-aminohexanoïque, l'acide 11-amino-undécanoïque, l'acide 12-aminododécanoïque, conduisant aux motifs 6, 11 et 12 respectivement. Des mélanges de lactame et d'amino-acide sont aussi envisagés.

Le terme "combinaison sensiblement stoechiométrique d'une ou plusieurs diamines avec un ou plusieurs acides" désigne un mélange ou un sel des composants diamine et diacide selon un rapport sensiblement 1/1, c'est-à-dire compris entre 1/1,05 et 1,05/1.

Le terme "diamine aliphatique" tel qu'utilisé dans la présente invention désigne une α,ω-diamine contenant entre les groupes amino terminaux au moins 4 atomes de carbone, de préférence 7 à 12. La chaîne carbonée est linéaire (polyméthylènediamine) ou ramifiée. Des mélanges de diamines aliphatiques sont aussi envisagés dans la présente invention. Des diamines aliphatiques préférées sont l'hexaméthylènediamine (HMDA), la 2,2,4- et/ou 2,4,4-triméthylhexaméthylènediamine, la dodécaméthylènediamine.
Le terme "diacide(s) aliphatique(s) carboxylique(s)" tel qu'utilisé dans la présente invnetion désigne les α,ω-diacides carboxyliques possédant au moins 2 atomes de carbone (non compris les atomes de carbone du groupe carboxylique), de préférence 4 à 12, dans la chaîne carbonée linéaire ou ramifiée. Des mélanges de ces diacides sont aussi envisagés dans le présente invention.
Les diacides carboxyliques préférés sont l'acide adipique, l'acide azélaïque, l'acide sébacique et l'acide 1,10-décanedicarboxylique.
Ainsi, le terme "combinaison sensiblement stoechiométrique d'une ou plusieurs diamine(s) aliphatique(s) et d'un ou plusieurs diacide(s) aliphatique(s)" peut représenter le motif 6,6 ou 6,12 par exemple, selon la notation couramment employée pour les polyamides.

Le terme "diacide aromatique" tel qu'utilisé dans la présente invention désigne les diacides de formule HOOC-Ar-COOH où Ar est un radical aromatique divalent. Ce terme "radical aromatique divalent" désigne un cycle aromatique ou deux ou plusieurs cycles aromatiques liés par un groupe alkyle. Ce radical peut être substitué selon toute configuration, par exemple ortho, méta, para dans le cas du phényle. Des mélanges de diacides aromatiques sont aussi envisagés dans la présente description.
Les diacides aromatiques préférés sont les acides térephtalique, isophtalique, naphtalène-2,6-dicarboxylique, le 4,4'-dicarboxydiphényléther, le 4,4'-dicarboxybiphényléther, et le 4,4'-dicarboxybisphényl-A. -A. Avantageusement, le diacide aromatique est l'acide térephtalique et/ou isophtalique, disponibles industriellement en grandes quantités.
Ce terme "diacide aromatique" couvre aussi un éventuel remplacement d'une partie du diacide aromatique par un autre diacide susceptible de conduire à un polyamide. De préférence, jusqu'à 15% en mole de diacide aromatique peuvent être remplacés par un ou plusieurs α,ω-diacide(s), tels que ceux mentionnés ci-avant pour le composant a. De tels acides sont, par exemple, les acides adipique, azélaïque, sébacique, décanedicarboxylique et leurs homologues substitués.

Le terme "diamine cycloaliphatique" tel qu'utilisé dans la présente invention désigne une amine de formule: 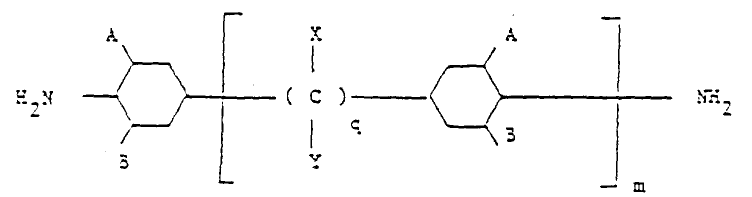 dans laquelle:
- A et B,: identiques ou différentes, représentent l'hydrogène, le radical méthyle, le radical éthyle ou le radical isopropyle;
- X et Y,: identiques ou différents, représentent l'hydrogène ou le radical méthyle;
- q: est un nombre entier compris entre 0 et 6, de préférence entre 1 et 3;
- m: vaut 0 ou 1.
Des mélanges de diamines cycloaliphatiques sont aussi envisagés dans la présente invention.

Ce terme "diamine cycloaliphatique" couvre aussi, au sens de la présente invention, les diamines comportant une structure cycloaliphatique telle que définie par la formule ci-dessus. On peut citer à titre d'exemple l'isophoronediamine.
De préférence, la diamine cycloaliphatique est choisie dans le groupe consistant en: isophoronediamine, le bis(4-aminocyclohexyl)méthane (BACM), le bis(3-méthyl-4-aminocyclohexyl)méthane (BMACM), le bis(3-méthyl-4-amino-5-éthylcyclohexyl)méthane, le 1,2-bis(4-aminocyclohexyl)éthane, le 2,2'-bis(4-aminocyclohexyl)propane et le 2,2'-bis(3-méthyl-4-aminocyclohexyl)propane.

Le terme "diamine(s) aromatique-aliphatique(s)" tel qu'utilisé dans la présente invention désigne les amines de formule:

H₂N-R₁-Ar'-R₂-NH₂

dans laquelle:
- R₁ et R₂,: identiques ou différents, sont des résidus hydrocarbonés en C₁ à C₆, linéaires en ramifiés;
- Ar': est un radical aromatique divalent ayant la même signification que Ar, précédemment cité, ledit radical Ar' pouvant par ailleurs être substitué selon toute configuration, similairement au groupe Ar précédemment cité.
Des mélanges de diamines aromatique-aliphatiques sont aussi envisagés dans la présente invention. A titre d'exemple, on peut citer la méta-xylylènediamine (pour laquelle Ar' = m-phényle, R₁ = R₂ = -CH₂-).
Des mélanges de diamine(s) aliphatique(s) et/ou cycloaliphatique(s) et/ou aromatique-aliphatique(s), notamment d'isomères, sont aussi envisagés dans la présente invention.

La proportion de motifs (c) qui réagissent au cours de l'étape (i) est comprise entre 10 et 90% en poids. Avantageusement, on fait réagir au cours de l'étape (ii) de 35 à 75% en poids, de préférence 40 à 60% en poids, des motifs (c).

L'étape (ii) peut être mise en oeuvre en une fois ou alternativement en au moins deux fois. Ainsi, le motif (c) peut être introduit en 1, 2, 3, ... fois (sous-étapes) ou plus, en des proportions variables identiques ou différentes pour chaque introduction.

Selon un mode de réalisation de la présente invention, les étapes (i) et (ii) du procédé sont effectuées à une température de 250 à 350°C, de préférence 270 à 320°C. De préférence, la température de l'étape (ii) est supérieure à celle de l'étape (i) d'une valeur comprise entre 15 et 50°C.

Selon un autre mode de réalisation de la présente invention, les étapes (i) et (ii) sont effectuées sous atmosphère inerte et sous une pression supérieure à la pression atmosphérique, de préférence comprise entre 5 et 30 bars. Les termes "température/pression de l'étape (ii)" signifie les températures/pressions des sous-étapes, identiques ou différentes, lorsque l'étape (ii) comprend lesdites sous-étapes. De préférence, la pression est amenée, à l'issue de l'étape (i), à une valeur comprise entre 5 et 0,5 bar, de préférence entre 1,5 et 0,5 bar, pendant l'introduction du solde ou partie du solde des motifs (c).

Selon un mode de réalisation de la présente invention, la pression au cours de l'étape (ii) est inférieure à celle de l'étape (i) d'une valeur comprise entre 1 et 15 bar.

Selon un autre mode de réalisation, au cours de l'étape (ii), on effectue une augmentation de température de 15 à 50°C, tandis que la pression est concouramment diminuée de préférence jusqu'à lenviron la pression atmosphérique.

Selon encore un autre mode de réalisation de la présente invention, les étapes (i) et (ii) sont effectuées sous atmosphère inerte et sous une pression inférieure ou égale à la pression atmosphérique, de préférence comprise entre 0,1 et 1 bar.

Le temps de réaction est compris entre 30 mn et 10 h, et dépend de la température. Plus la température de réaction est élevée, plus le temps de réaction est faible. Le temps de réaction doit être, dans tous les cas, suffisant pour assurer que la réaction s'est produite de façon quantitative.

Selon un mode préféré de réalisation, l'oligomère produit à l'étape (i) est isolé avant réaction au cours de l'étape (ii).
Le terme "isolé" signifie un quelconque changement notable des conditions opératoires entre les étapes (i) et (ii).
Notamment, l'oligomère peut être sorti du réacteur à des fins d'analyse ou transféré dans un second réacteur où s'effectue la seconde étape de réaction. On peut aussi mettre en oeuvre une dépressurisation à l'issue de l'étape (i), avant l'introduction de la diamine. Ainsi la pression peut être diminuée par exemple de 15 bar jusqu'au vide, le solde de la diamine est introduit et la pression remonte suite à la formation de l'eau due à la réaction.

L'étape (ii) peut aussi être mise en oeuvre partiellement: on sort du réacteur un "prépolymère" dont le degré d'avancement de la réaction est compris entre 0,4 et 0,99. Ce prépolymère peut être repris directement ou avec un stockage intermédiaire sous forme solide (granulé par exemple), afin d'effectuer la fin de la polycondensation. Cette opération est dite remontée en viscosité. L'étape (ii) peut donc comprendre une remontée en viscosité.

Cette remontée en viscosité peut être effectuée sur un réacteur de type extrudeuse sous pression atmosphérique ou sous vide. Cette remontée en viscosité peut aussi, dans le cas des copolyamides cristallins ou semi-cristallins, être effectuée en phase solide, à une température située entre la température de transition vitreuse Tg et la température de fusion. Classiquement, il s'agit d'une température d'environ 100°C au-dessus de la Tg. Le chauffage peut être assuré par un gaz ou fluide caloporteur, tel que l'azote, la vapeur d'eau ou des liquides inertes comme certains hydrocarbures.

Le procédé selon la présente invention peut être mis en oeuvre dans tout réacteur classiquement utilisé en polymérisation, tel que des réacteurs à agitateurs à ancre ou à rubans. Cependant, l'étape (ii) peut aussi être mise en oeuvre dans un réacteur horizontal, plus communément appelé par l'homme de l'art "finisher". Ces finishers peuvent être équipés de dispositif de mise sous vide, d'introduction de réactif (ajout de diamine) qui peut être étagée ou non, et peuvent fonctionner dans un large intervalle de température.

Le procédé peut être catalysé par des catalyseurs connus de polyamidification, tels que les acides phosphorique et hypophosphoreux à des concentrations de l'ordre de 0,001 à 0,2% en poids.

Les proportions de motifs (a), (b) et (c), en tant que produits de départ et motifs du polymère obtenu, peuvent varier dans de larges mesures. Ci-après sont donnés les intervalles de pourcentages en poids, étant entendu que la somme est égale à 100%:

20 ≤ (a) ≤ 80; 20 ≤ (b) ≤ 80; 20 ≤ (c) ≤ 80 La condition que doivent satisfaire (a), (b) et (c) et que la quantité de diamine (c) ajoutée est sensiblement stoechiométrique par rapport à la quantité de diacide (b), c'est-à-dire le rapport molaire (b)/(c) varie entre 1/0,9 à 1/1,1.

Le présent procédé permet d'obtenir des polyamides de propriétés très variables. Ceux-ci peuvent être amorphes ou semi-cristallins, à Tg faible ou élevée, .....
Préférentiellement, le motif diacide aromatique est l'acide térephtalique et/ou isophtalique.

Selon une forme d'exécution de la présente invention, le motif diamine (c) est une diamine aliphatique, de préférence la HMDA.

Selon une autre forme d'exécution de la présente invention, le motif diamine (c) est une diamine cycloaliphatique, de préférence la BACM et/ou la BMACM.
Préférentiellement, le motif aliphatique (a) est un motif 12 et/ou 11.

La présente invention n'est pas limitée à ce procédé et a aussi pour objet les polyamides obtenus à l'aide de ce procédé.

Il est possible d'ajouter, à ces polymères, à l'issue du procédé ou au cours de l'étape (ii), outre le solde de diamine, des additifs habituels des polyamides, tels: stabilisants à la lumière et/ou à la chaleur, colorants, azurants optiques, plastifiants, agents de démoulage, agents d'ignifugation, charges habituelles telles que talc, fibres de verre, pigments, oxydes métalliques, métaux arylamides, polyesters aromatiques.

D'autres buts et avantages de la présente invention apparaîtront à la lecture des exemples suivants donnés à titre nullement limitatif.

### MODE OPERATOIRE DANS LES EXEMPLES SUIVANTS

Au laboratoire, on emploie un réacteur en acier de 5 1 équipée d'un agitateur à ancre et d'une sonde de température matière. La progression de la réaction est suivie en mesurant le couple transmis sur l'agitateur, et on peut ainsi évaluer la monté en viscosité du polymère. Le polymère est sorti du réacteur lorsque l'on atteint une valeur de couple d'environ 0,6-0,8 N/m pour une vitesse de 25 tr/mn. La sortie du polymère est effectuée sous une pression d'azote de 1 à 2 bar par une vanne de fond chauffée à 280-300°C située sous le réacteur. Le polymère est récupéré sous la forme d'un jonc qui est refroidi par trempe par passage dans une bassine contenant de l'eau.

### Exemple 1 - (comparatif, pression autogène)

On charge 591 g de lauryllactame L12, 415,35 g d'acide téréphtalique (T) et 299,51 g d'HMDA dans un réacteur en acier muni d'une ancre d'agitation. Le réacteur est refermé puis subi trois purges d'azote à 5 bar afin d'éliminer l'oxygène résiduel. La température matière est montée de la température ambiante à 280°C en 120 mn. L'agitation est mise à 50 tr/mn dès que le milieu est agitable (au bout de 10 mn de chauffe). Lorsque l'on atteint 260°C, on observe une montée en pression dans le réacteur qui correspond au début de la polycondensation (formation d'eau), cette pression atteint 26 bar lorsque l'on atteint 280°C matière. On maintient alors la masse réactionnelle à 280°C pendant 210 mn sous la pression autogène qui se stabilise à 24,5 bar. Jusqu'à ce stade, on ne note aucune évolution du couple. On commence ensuite à détendre le réacteur tout en augmentant la température matière à 290°C, cette opération étant réalisée progressivement sur 15 mn. On observe pendant cette période une augmentation du couple qui passe de 0,01 à 0,14 N/m pour 50 tr/mn pendant cette détente. La réaction est ensuite maintenue (5 mn) sous un léger courant d'azote, le couple augmente alors rapidement pour atteindre 0,9, l'agitation est alors diminuée à 25 tr/mn pour un couple égal à 0,6 N/m. Ce couple augmente alors très rapidement. On arrête l'agitation pour sortir le polymère final constitué de 55% molaire de motif L12 et 45% molaire de motif 6,T.

On parvient à sortir seulement une centaine de gramme d'un polymère qui paraît partiellement réticulé: aspect caoutchoutique à la sortie.

L'analyse DSC de ce polymère révèle que le point de fusion est de 240°C, et la température de transition vitreuse est de 77,6°C.

Le polymère obtenu n'est plus soluble dans l'alcool benzylique pour la mesure de viscosité inhérente.

### Exemple 2 - (comparatif, pression constante 10 bar)

On charge 591 g de lauryllactame L12, 415,35 g d'acide téréphtalique et 299,51 g d'HMDA dans un réacteur en acier muni d'une ancre d'agitation. Le réacteur est refermé puis subi trois purges d'azote à 5 bar afin d'éliminer l'oxygène résiduel. La température matière est montée de la température ambiante à 280°C en 120 mn, l'agitation est mise à 50 tr/mn dès que le milieu est agitable (au bout de 10 mn de chauffe). Durant cette période de chauffe, on surveille la pression qui augmente dans le réacteur et on la limite à 10 bar en détendant légèrement lorsque cette pression devient supérieur. On maintient alors la réaction à 280°C sous 10 bar pendant 210 mn. Jusqu'à ce stade, on ne note aucune évolution du couple. On commence ensuite à détendre le réacteur tout en augmentant la température matière à 300°C, cette opération est réalisée progressivement sur 25 mn. On observe pendant cette période une augmentation du couple qui passe de 0,11 à 0,26 N/m pour 50 tr/mn pendant cette détente. La réaction est ensuite maintenue (5 mn) sous un léger courant d'azote, l'agitation est alors diminuée à 25 tr/mn. Au cours de 40 mn, le couple est monté à 1,1 N/m pour 25 tr/mn, le polymère est alors sorti du réacteur.

Le polymère obtenu possède une viscosité inhérente de 1,19, une température de fusion de 275°C et une température vitreuse de 72°C.

Seulement 400 g de polymère peuvent être extraits du réacteur.

### Exemple 3

On opère en deux étapes: synthèse d'un oligomère diacide par réaction de la totalité des composants lactame(s) ou aminoacide(s) avec la totalité des composants diacide(s) et seulement environ la moitié des composants diamine(s).

### - première étape:

On charge dans le réacteur 591 g (3 moles) de lauryllactame, 415,35 g (2,49 moles) d'acide téréphtalique et 173 g d'HMDA (1,49 moles) soit 60% de la diamine nécessaire pour former le polymère. Le réacteur est fermé puis purgé à l'azote. On effectue alors la montée en température (réacteur fermé) jusqu'à 280°C matière en 120 mn, l'agitation est fixée à 50 tr/mn. Lorsque l'on atteint 227°C, on note une pression de 9 bar dans le réacteur, à 280°C cette pression se stabilise à 16 bar. On maintient 160 mn à 280°C, puis l'on effectue une détente progressive jusqu'à 5 bar (10 mn). On laisse le mélange réactionnel se refroidir jusqu'à 200°C, l'oligomère est alors sorti du réacteur dans de l'eau.

On effectue une analyse des groupements fonctionnels acide (1,55 milliéquivalents/g) et l'on trouve une Mn de 1290 pour cet oligomère diacide (en théorie Mn = 1126), la teneur en groupement fonctionnel NH₂ est de 0,1. Le taux de lauryllactame L12 résiduel mesuré est de 0,18%, le taux d'acide téréphtalique résiduel est de 1,2% (massique).

### - deuxième étape:

Dans le réacteur qui contient 1290 g (1 mole) d'un oligomère de Mn 1290 synthétisé selon le mode opératoire décrit ci-avant, on ajoute 116,2 g d'HMDA (1 mole), soit le restant de la diamine non introduite dans la première étape. Le réacteur est fermé puis purgé à l'azote. La température matière est montée progressivement à 280°C sur 120 mn avec une agitation à 50 tr/mn. On obtient alors une pression de 9 bar dans le réacteur. On maintient la température à 280°C pendant 30 mn puis on effectue une détente progressive de 9 bar à la pression atmosphérique tout en augmentant la température matière à 300°C (durée 30 mn). Après cette détente, on garde le réacteur sous azote, le couple est alors de 0,1 N/m à 50 tr/mn. La vitesse d'agitation est baissée à 25 tr/mn et la température matière portée à 310°C (30 mn), au bout de ces 30 mn, le couple est de 0,32 N/m à 25 tr/mn et évolue de façon régulière. Le couple atteint la valeur de 1,1 après encore 45 mn à 310°C, à ce niveau le polymère est sorti du réacteur.

On récupère ainsi 1150 g d'un polymère. Le point de fusion de ce polymère est de 277°C et la température de transition vitreuse de 72°C, sa viscosité inhérente est de 1,12.

### Exemple 4

Dans un autoclave, on charge 5,94 kg de lactame 12 (30,15 moles), 4,16 kg d'acide téréphtalique (24,9 moles) et 1,49 kg d'HMDA (pureté 97%) (12,5 moles, soit 50% de la stoechiométrie). Le réacteur fermé est porté à 280°C puis maintenu à cette température pendant 90 mn sous une agitation fixée à 30 tr/mn, la pression s'établit à 17 bar dans le réacteur. Après ce maintien à 280°C, on effectue une détente du réacteur en isotherme (280°C) jusqu'à une pression de 0,5 bar, cette détente est effectuée progressivement sur 60 mn. Le restant de la diamine est alors introduite dans le réacteur, soit 1,49 kg d'HMDA. La pression dans le réacteur remonte alors pour se stabiliser à 15 bar sous 280°C. Cette opération (introduction de la diamine et stabilisation du réacteur à 280°C, 15 bar) dure 50 mn. On maintient encore le mélange réactionnel à 280°C, 15 bar pendant 90 mn. Ensuite, on effectue une détente de la pression conjointement à une augmentation de la température matière, on passe alors de 280°C à 317°C et de 15 bar à la pression atmosphérique, de façon progressive, en 65 mn. Le couple de l'agitateur monte et le polymère est sorti du réacteur 6 mn après la fin de cette détente.

Le polymère obtenu possède une température de fusion de 277°C et une viscosité inhérente de 1,2. Son indice d'écoulement à l'état fondu (Melt Flow Index) est de 4,1 g/10 mn à 300°C/2,16 kg (avec une filière de 2,095 mm de diamètre).

### Exemple 5

Dans un autoclave; on charge 11,05 kg de lactame 12 (51,4 moles),5,83 kg d'acide téréphtalique (35,1 moles), 1,946 kg d'acide isophtalique (11,7 moles) et 5,58 kg de diamine BMACM (23,4 moles, soit 50% de la stoechiométrie). Le réacteur fermé est porté à 280°C puis maintenu à cette température pendant 90 mn sous une agitation fixée à 50 tr/mn, la pression s'établit à 14 bar dans le réacteur. Après ce maintien à 280°C, on effectue une détente du réacteur en isotherme (280°C) jusqu'à une pression de 0 bar (relatif), cette détente est effectuée progressivement sur 60 mn. Le restant de la diamine est alors introduite dans le réacteur, soit 5,58 kg de BMACM. La pression dans le réacteur remonte alors pour se stabiliser à 14 bar sous 270°C. Cette opération (introduction de la diamine et stabilisation du réacteur à 270°C, 14 bar) dure 60 mn. On maintient encore le mélange réactionnel à 270°C, 14 bar pendant 90 mn. Ensuite, on effectue une détente de la pression conjointement à une augmentation de la température matière, on passe alors de 270°C à 288°C et de 14 bar à la pression atmosphérique, de façon progressive, en 60 mn. Le couple de l'agitateur monte et le polymère est sorti du réacteur 50 mn après la fin de cette détente. On récupère 24,7 kg de polymère.

Le copolyamide obtenu est transparent et amorphe. Il possède une température de transition vitreuse de 160°C et une viscosité inhérente de 1,22.

### Exemple 6 (comparatif)

Dans un réacteur en verre, muni d'une agitateur mécanique, et sous courant d'azote (P=1bar), on introduit: 15,3 g d'acide 6-aminohexanoïque, 20,1 g d'acide téréphtalique et 14,75 g d'HMDA (excès de 3%). On plonge le réacteur dans un bain chauffant maintenu à 240°C. Au bout de 5 minutes, on porte la température du bain à 290°C en 50 mn. A cette température (290°C) le milieu est pâteux, hétérogène et opaque. On porte alors la température à 320°C en 40 mn. On observe que peu d'évolution; notamment la viscosité du milieu n'augmente que très faiblement, le milieu est peu homogène, on observe des parties infusibles dans le milieu réactionnel. La réaction est arrêtée.

On obtient un produit très cassant et de viscosité inhérente très faible et égale à 0,54.

### Exemple 7

On procède de la même manière que dans l'exemple 6, et avec les mêmes quantités, mais l'addition de la diamine est fractionnée en deux.

On introduit 15,3 g d'acide amino-6-hexanoïque, 20,1 g d'acide téréphtalique et 7,3 g d'HMDA (50% par rapport à l'exemple 7). On plonge le réacteur dans un bain chauffant maintenu à 240°C. Au bout de 5 mn, on porte la température du bain à 290°C en 20 mn. Le milieu est alors parfaitement fondu (et de faible viscosité). On ajoute alors dans le réacteur 7,35g d'HMDA restante sous forme solide. La température du bain est portée à 320°C en 50 mn. Durant cette période on observe que le milieu reste homogène et transparent (pas de parties infondues); de plus sa viscosité augmente très rapidement. La réaction est arrêtée à 320°C.

On obtient un polymère présentant une résistance élevée, et ayant une viscosité inhérente de 1,30. L'analyse DSC indique une température de fusion de 295°C et une température de transition vitreuse de 103°C.

### Exemple 8

On opére de la même manière que dans l'exemple 7 avec 6,7 g d'acide aminohexanoïque, 18,6 g d'acide téréphtalique, 6,8 g d'acide isophtalique et 18,71 g d'HMDA. L'introduction de l'HMDA est effectuée comme dans l'exemple 7, en deux fractions de 9,36 g puis 9,35 g.

On obtient un polymère de viscosité inhérente 1,10, présentant un point de fusion de 302°C et une température de transition vitreuse de 115°C.

### Exemple 9

Dans un autoclave, on charge 4,1 kg de lactame12, 4,16 kg d'acide téréphtalique et 2,0 kg d'HMDA (soit 68% de la stoechiométrie théorique). Le réacteur fermé est porté à 280°C puis maintenu à cette température pendant 90 mn. (sous agitation à 30 tr/mn). La pression s'établit à 24 bar dans le réacteur. Ensuite, on effectue une détente jusqu'à une pression de 1 bar, sur une période de 60 mn. On introduit alors 0,86 kg d'HMDA (soit 68+29=97% de la stoechiométrie théorique). La pression dans le réacteur augmente alors pour se stabiliser à 7 bar. On maintient ensuite le mélange réactionnel à 280°C pendant une période de 90 mn. On effectue alors de façon conjointe une détente du réacteur et une montée en température afin d'atteindre 320°C et 1 bar (sur une période de 65 mn). Le produit déficitaire en fonction amine (97% de l'HMDA théorique) de viscosité inhérente 0,60 est sorti du réacteur, refroidi jusqu'à température ambiante puis broyé. 5 kg de ce produit sont mélangés avec 0,10 kg d'HMDA (soit les 3% restants et un excès stoechiométrique de 3% de fonctions NH₂/COOH). Le produit subit un passage sur une extrudeuse ZSK30 avec une température matière de 320°C.

On obtient alors un polymère présentant une viscosité inhérente de 0,90, une température de fusion de 295°C et une température de transition vitreuse de 85°C.

## Revendications

1. Procédé de fabrication de polyamides constitués des motifs:
(a) lactame(s) et/ou aminoacide(s) correspondant(s) ou la combinaison sensiblement stoechiométrique d'une ou plusieurs diamine(s) aliphatique(s) et d'un ou plusieurs acide(s) aliphatique(s) dicarboxyliques(s),
(b) diacide(s) aromatique(s) HOOC-Ar-COOH, où Ar est un radical aromatique divalent;
(c) diamine(s) cycloaliphatique(s) et/ou aliphatique(s) et/ou aromatique-aliphatique(s),
comprenant les étapes de:
(i) réaction des motifs (a) lactame(s) et/ou aminoacide(s) correspondant(s) ou la combinaison sensiblement stoechiométrique d'une ou plusieurs diamine(s) aliphatique(s) et d'un ou plusieurs acide(s) aliphatique(s) dicarboxylique(s), avec les motifs (b) diacide(s) aromatique(s), et avec de 10 à 90% en poids des motifs (c) diamine(s) aliphatique(s) et/ou cycloaliphatique(s) et/ou aromatique-aliphatique(s); et
(ii) réaction de l'oligomère produit de l'étape (i) avec le solde des motifs (c) diamine(s) aliphatique(s) et/ou cycloaliphatique(s) et/ou aromatique-aliphatique(s) en une ou plusieurs fois.

2. Procédé selon la revendication 1, caractérisé en ce que l'on fait réagir au cours de l'étape (ii) de 35 à 75% en poids, de préférence 40 à 60% en poids, des motifs (c).

3. Procédé selon la revendication 1 ou 2, caractérisé en ce que l'étape (ii) est mise en oeuvre en une fois.

4. Procédé selon la revendication 1 ou 2, caractérisé en ce que l'étape (ii) est mise en oeuvre en au moins deux fois.

5. Procédé selon la revendication 1 à 4, caractérisé en ce que la température lors des étapes (i) et (ii) est comprise entre 250 et 350°C, de préférence 270 et 320°C.

6. Procédé selon la revendication 1 à 5, caractérisé en ce que la température de l'étape (ii) est supérieure à celle de l'étape (i) d'une valeur comprise entre 15 et 50°C.

7. Procédé selon l'une quelconque des revendications 1 à 6, caractérisé en ce que les étapes (i) et (ii) sont effectuées sous atmosphère inerte et sous une pression supérieure à la pression atmosphérique, de préférence comprise entre 5 et 30 bars.

8. Procédé selon la revendication 7, caractérisé en ce que la pression est amenée, à l'issue de l'étape (i), à une valeur comprise entre 5 et 0,5 bar, de préférence 1,5 à 0,5 bar, pendant l'introduction du solde ou partie du solde des motifs (c).

9. Procédé selon la revendication 7 ou 8, caractérisé en ce que la pression au cours de l'étape (ii) est inférieure à celle de l'étape (i) d'une valeur comprise entre 1 et 15 bar.

10. Procédé selon l'une quelconque des revendications précédentes, caractérisé en ce qu'au cours de l'étape (ii), on effectue une augmentation de température de 15 à 50°C, tandis que la pression est concouramment diminuée, de préférence jusqu'à la pression atmosphérique.

11. Procédé selon l'une quelconque des revendications 1 à 6, caractérisé en ce que les étapes (i) et (ii) sont effectuées sous atmosphère inerte et soUs une pression inférieure ou égale à la pression atmosphérique, de préférence comprise entre 0,1 et 1 bar.

12. Procédé selon l'une quelconque des revendications précédentes, caractérisé en ce que l'oligomère produit à l'étape (i) est isolé avant réaction au cours de l'étape (ii).

13. Procédé selon l'une quelconque des revendications précédentes, caractérisé en ce que l'étape (ii) comprend une remontée en viscosité.

14. Procédé selon l'une quelconque des revendications précédentes, caractérisé en ce que les proportions pondérales de motifs (a), (b) et (c) sont respectivement: 20 ≤ (a) ≤ 80; 20 ≤ (b) ≤ 80; 20 ≤ (c) ≤ 80, avec le rapport molaire (b)/(c) compris entre 1/0,9 et 1/1,1 et la somme (a) + (b) + (c) égale à 100.

15. Procédé selon l'une quelconque des revendications précédentes, caractérisé en ce que le motif diacide aromatique est l'acide téréphtalique et/ou isophtalique.

16. Procédé selon l'une quelconque des revendications 1 à 15, caractérisé en ce que le motif diamine (c) est une diamine aliphatique, de préférence la HMDA.

17. Procédé selon l'une quelconque des revendications 1 à 15, caractérisé en ce que le motif diamine (c) est une diamine cycloaliphatique, de préférence la BACM et/ou la BMACM.

18. Procédé selon l'une quelconque des revendications précédentes, caractérisé en ce que le motif aliphatique (a) est un motif 12 et/ou 11.

19. Polyamides obtenus par le procédé selon l'une quelconque des revendications 1 à 18.

## Patentansprüche

1. Verfahren zur Herstellung von Polyamiden, die zusammengesetzt sind aus:
(a) einer oder mehreren Lactam- und/oder entsprechenden Aminosäureeinheiten oder der ungefähr stöchiometrischen Zusammensetzung einer oder mehrerer aliphatischer Diamine und einer oder mehrerer aliphatischer Dicarbonsäuren,
(b) einer oder mehreren aromatischen Disäureeinheiten HOOC-Ar-COOH, wobei Ar ein divalentes aromatisches Radikal darstellt;
(c) einer oder mehreren cycloaliphatischen und/oder aliphatischen und/oder aromatisch-aliphatischen Diamineinheiten,
wobei dieses Verfahren folgende Schritte umfaßt:
(i) Reaktion (a) der Lactam- und/oder entsprechenden Aminosäureeinheit(en) oder der ungefähr stöchiometrischen Zusammensetzung einer oder mehrerer aliphatischer Diamine und einer oder mehrerer aliphatischer Dicarbonsäuren mit (b) einer oder mehreren aromatischen Disäureeinheiten und mit 10 bis 90 Gew.-% von (c) einer oder mehreren aliphatischen und/oder cycloaliphatischen und/oder aromatisch-aliphatischen Diamineinheiten; und
(ii) Reaktion des in Schritt (i) hergestellten Oligomeren mit (c) den (der) übrigbleibenden aliphatischen und/oder cycloaliphatischen und/oder aromatisch-aliphatischen Diamineinheit(en) in einem oder mehreren Teilschritten.

2. Verfahren nach Anspruch 1, dadurch gekennzeichnet, daß man während Schritt (ii) 35 bis 75 Gew.-%, vorzugsweise 40 bis 60 Gew.-% der Einheiten (c) reagieren läßt.

3. Verfahren nach Anspruch 1 oder 2, dadurch gekennzeichnet, daß Schritt (ii) in einem einzigen Teilschritt durchgeführt wird.

4. Verfahren nach Anspruch 1 oder 2, dadurch gekennzeichnet, daß Schritt (ii) in mindestens zwei Teilschritten durchgeführt wird.

5. Verfahren nach den Ansprüchen 1 bis 4, dadurch gekennzeichnet, daß die Temperatur während der Schritte (i) und (ii) zwischen 250 und 350 °C, vorzugsweise zwischen 270 und 320 °C beträgt.

6. Verfahren nach den Ansprüchen 1 bis 5, dadurch gekennzeichnet, daß die Temperatur des Schrittes (ii) um einen Wert von 15 bis 50 °C höher liegt als die Temperatur des Schrittes (i).

7. Verfahren nach einem der Ansprüche 1 bis 6, dadurch gekennzeichnet, daß die Schritte (i) und (ii) unter Inertgasatmosphäre durchgeführt werden und unter einem Druck, der oberhalb des Atmosphärendrucks liegt und vorzugsweise zwischen 5 und 30 bar beträgt.

8. Verfahren nach Anspruch 7, dadurch gekennzeichnet, daß am Ende von Schritt (i) der Druck auf einen Wert von 5 bis 0,5 bar, vorzugsweise 1,5 bis 0,5 bar gebracht wird, während man die restlichen oder ein Teil der restlichen Einheiten (c) zuführt.

9. Verfahren nach Anspruch 7 oder 8, dadurch gekennzeichnet, daß der Druck während Schritt (ii) um einen Wert von 1 bis 15 bar niedriger liegt als der Druck von Schritt (i).

10. Verfahren nach einem der vorangehenden Ansprüche, dadurch gekennzeichnet, daß man während Schritt (ii) eine Erhöhung der Temperatur um 15 bis 50°C durchführt, während man gleichzeitig den Druck vermindert, vorzugsweise bis auf Atmosphärendruck.

11. Verfahren nach einem der Ansprüche 1 bis 6, dadurch gekennzeichnet, daß die Schritte (i) und (ii) unter Inertgasatmosphäre durchgeführt werden und bei einem Druck unterhalb oder gleich Atmosphärendruck, vorzugsweise zwischen 0,1 und 1 bar.

12. Verfahren nach einem der vorangehenden Ansprüche, dadurch gekennzeichnet, daß das in Schritt (i) hergestellte Oligomere vor der Reaktion im Verlauf von Schritt (ii) isoliert wird.

13. Verfahren nach einem der vorangehenden Ansprüche, dadurch gekennzeichnet, daß Schritt (ii) einen Wiederanstieg der Viskosität umfaßt.

14. Verfahren nach einem der vorangehenden Ansprüche, dadurch gekennzeichnet, daß die Gewichtsanteile der Einheiten (a), (b) und (c) jeweils folgende Werte betragen: 20 ≤ (a) ≤ 80; 20 ≤ (b) ≤ 80; 20 ≤ (c) ≤ 80 mit einem Molverhältnis (b)/(c) zwischen 1/0,9 und 1/1,1 und mit der Summe (a)+(b)+(c) gleich 100.

15. Verfahren nach einem der vorangehenden Ansprüche, dadurch gekennzeichnet, daß die aromatische Disäureeinheit Terephthalsäure und/oder Isophthalsäure ist.

16. Verfahren nach einem der Ansprüche 1 bis 15, dadurch gekennzeichnet, daß die Diamineinheit (c) ein aliphatisches Diamin ist, vorzugsweise Hexamethylendiamin (HMDA).

17. Verfahren nach einem der Ansprüche 1 bis 15, dadurch gekennzeichnet, daß die Diamineinheit (c) ein cycloaliphatisches Diamin ist, vorzugsweise Bis(4-aminocyclohexyl)methan (BACM) und/oder Bis(3-methyl-4-aminocyclohexyl)methan (BMACM).

18. Verfahren nach einem der vorangehenden Ansprüche, dadurch gekennzeichnet, daß die aliphatische Einheit (a) eine C₁₂- und/oder C₁₁-Einheit ist.

19. Polyamide, die durch das Verfahren nach einem der Ansprüche 1 bis 18 erhalten worden sind.

## Claims

1. Process for the manufacture of polyamides composed of the following units:
(a) lactam(s) and/or corresponding amino acid(s) or the substantially stoichiometric combination of one or a number of aliphatic diamine(s) and of one or a number of aliphatic dicarboxylic acid(s)
(b) aromatic diacid(s) HOOC-Ar-COOH, where Ar is a divalent aromatic radical,
(c) cycloaliphatic and/or aliphatic and/or aromaticaliphatic diamine(s),
comprising the stages of:
(i) reaction of the lactam(s) and/or corresponding amino acid(s) or the substantially stoichiometric combination of one or a number of aliphatic diamine(s) and of one or a number of aliphatic dicarboxylic acid(s) units (a) with the aromatic diacid(s) units (b) and with from 10 to 90 % by weight of the aliphatic and/or cycloaliphatic and/or aromatic-aliphatic diamine(s) units (c); and
(ii) reaction of the oligomer produced in stage (i) with the balance of the aliphatic and/or cycloaliphatic and/or aromatic-aliphatic diamine(s) units (c) in one or a number of steps.

2. Process according to Claim 1, characterized in that, during stage (ii), from 35 to 75 % by weight, preferably 40 to 60 % by weight, of the units (c) are reacted.

3. Process according to Claim 1 or 2, characterized in that stage (ii) is carried out in one step.

4. Process according to Claim 1 or 2, characterized in that stage (ii) is carried out in at least two steps.

5. Process according to Claims 1 to 4, characterized in that the temperature during stages (i) and (ii) is between 250 and 350°C, preferably 270 and 320°C.

6. Process according to Claims 1 to 5, characterized in that the temperature of stage (ii) is greater than that of stage (i) by a value of between 15 and 50°C.

7. Process according to any one of Claims 1 to 6, characterized in that stages (i) and (ii) are carried out under an inert atmosphere and at a pressure greater than atmospheric pressure, preferably of between 5 and 30 bars.

8. Process according to Claim 7, characterized in that the pressure is brought, on conclusion of stage (i), to a value of between 5 and 0.5 bar, preferably 1.5 to 0.5 bar, during the introduction of the balance or part of the balance of the units (c).

9. Process according to Claim 7 or 8, characterized in that the pressure during stage (ii) is less than that of stage (i) by a value of between 1 and 15 bar.

10. Process according to any one of the preceding claims, characterized in that, during stage (ii), the temperature is increased by 15 to 50°C whereas the pressure is concurrently decreased, preferably to atmospheric pressure.

11. Process according to any one of Claims 1 to 6, characterized in that stages (i) and (ii) are carried out under an inert atmosphere and at a pressure which is less than or equal to atmospheric pressure, preferably of between 0.1 and 1 bar.

12. Process according to any one of the preceding claims, characterized in that the oligomer produced in stage (i) is isolated before reaction during stage (ii).

13. Process according to any one of the preceding claims, characterized in that stage (ii) comprises a rise in viscosity.

14. Process according to any one of the preceding claims, characterized in that the proportions by weight of units (a), (b) and (c) are respectively: 20 ≤ (a) ≤ 80; 20 ≤ (b) ≤ 80; 20 ≤ (c) ≤ 80, with the (b)/(c) molar ratio between 1/0.9 and 1/1.1 and the sum (a) + (b) + (c) equal to 100.

15. Process according to any one of the preceding claims, characterized in that the aromatic diacid unit is terephthalic and/or isophthalic acid.

16. Process according to any one of Claims 1 to 15, characterized in that the diamine unit (c) is an aliphatic diamine, preferably HMDA.

17. Process according to any one of Claims 1 to 15, characterized in that the diamine unit (c) is a cycloaliphatic diamine, preferably BACM and/or BMACM.

18. Process according to any one of the preceding claims, characterized in that the aliphatic unit (a) is a 12 and/or 11 unit.

19. Polyamides obtained by the process according to any one of Claims 1 to 18.
